# EUROPEAN PATENT SPECIFICATION

(11) **EP 1 950 458 B1**
(45) Date of publication and mention of the grant of the patent: **21.07.2010**
(21) Application number: 08250291.5
(22) Date of filing: 23.01.2008
(51) Int. Cl.: F16H 57/00, F16H 57/04, F16H 57/02, B62M 7/02, B62K 11/04

(54) **Motorcycle including belt type continuously variable transmission having resin block belt**
Motorrad mit stufenlosem Riemenantrieb mit Harz-Treibriemen
Motocyclette dotée d'une transmission à variation continue de type courroie ayant une courroie de type bloc de résine

(30) Priority: 26.01.2007 JP 2007016489
(43) Date of publication of application: 30.07.2008
(73) Proprietor: Yamaha Hatsudoki Kabushiki Kaisha, Iwata-shi, Shizuoka-ken 438-8501 (JP)
(72) Inventor: Ishida, Yousuke, Shizuoka-ken 438-8501 (JP)
(74) Representative: Harris, Ian Richard

(56) References cited:
- JP-A- 2002 130 440
- JP-A- 2002 147 582
- US-B1- 7 059 438

## Description

### BACKGROUND

The present invention relates to a motorcycle including a belt type continuously variable transmission having a resin block belt.

JP2002-130440 discloses a motorcycle with the following features of claim 1:
- an engine unit having a transmission casing in which a belt chamber is formed, and a belt type continuously variable transmission housed in the belt chamber and having a belt;
- a frame member disposed more rearward than or above the transmission casing, extending in a vertical direction or an obliquely upward and downward direction, and supporting at least a part of the engine unit;
- an air passage connected to the transmission casing, and used as an exhaust passage for discharging air from the belt chamber;
- wherein the air passage extends rearward from the transmission casing passing over the frame member in a side view.

JP2002-130440 does not disclose that
- the belt is a resin block belt and
- the air passage has a curving part curving at a part around the frame member.

A further motorcycle including a belt type continuously variable transmission is known in the art (for example, see JP-A-2002-147582).

A belt type continuously variable transmission includes a primary sheave, a secondary sheave, and a V-belt wound around the primary sheave and the secondary sheave. A driving force of a crankshaft of an engine is transmitted in order of the primary sheave, the V-belt, and the secondary sheave. The driving force is transmitted to a driving wheel after a speed is changed. The primary sheave, the V-belt, and the secondary sheave are housed inside the transmission casing. That is, a belt chamber is formed inside the transmission casing, and the primary sheave, the V-belt, and the secondary sheave are housed in the belt chamber.

In the motorcycle disclosed in JP-A-2002-147582, a resin block belt is used in the view of improving a durability of the V-belt and preventing heat generation due to deformation. The resin block belt includes a large number of resin blocks, and coupling members for coupling those resin blocks together. However, because the resin blocks are separated from each other, the resin blocks tend to collide with each other while the V-belt is running. Therefore, the resin block belt tends to cause more noise comparing with a rubber belt.

In consideration of the problem, JP-A-2002-147582 suggests that a sound absorption material be disposed on an inner surface of the transmission casing for accommodating the resin block belt for the purpose of preventing noise.

However, the V-belt runs at a high speed, and the primary sheave and the secondary sheave rotate at high speeds. Therefore, it is necessary to dispose the sound absorption material not to contact with the V-belt and both the sheaves. In other words, it is necessary to dispose the sound absorption material mentioned above at a position with a certain distance away from the V-belt and both the sheaves. Therefore, if the sound absorption material is disposed on the inner surface of the transmission casing as in the motorcycle disclosed in JP-A-2002-147582, a space for the sound absorption material needs to be provided inside the transmission casing in advance. However, a volume of the belt chamber becomes large if an extra space for the sound absorption material is provided inside the transmission casing. Therefore, the motorcycle disclosed in JP-A-2002-147582 has a problem that the belt type continuously variable transmission itself tends to become large in size.

Normally, a sound absorption material also has a thermal insulation function. Therefore, a temperature inside the belt chamber is apt to rise in the motorcycle disclosed in JP-A-2002-147582 because the sound absorption material is provided on the inner surface of the transmission casing. Thus, there is a problem that a durability of the resin block belt lowers due to a temperature increase in the belt chamber.

The present invention is made in consideration of the foregoing problems and seeks to provide a noise preventing means suitable for a motorcycle including a belt type continuously variable transmission having a resin block belt.

### SUMMARY

An aspect of the present invention provides a motorcycle, including: an engine unit having a transmission casing in which a belt chamber is formed, and a belt type continuously variable transmission housed in the belt chamber and having a resin block belt; a frame member disposed more rearward than or above the transmission casing, extending in a vertical direction or an obliquely upward and downward directions, and supporting at least a part of the engine unit; and an air passage connected to the transmission casing, and used as an intake passage for inducting air into the belt chamber or as an exhaust passage for discharging air from the belt chamber, in which the air passage extends rearward from the transmission casing passing over the frame member in a side view, and has a curving part curving at a part around the frame member.

The inventors determined that the noise produced in a belt type continuously variable transmission having a resin block belt is mostly pitch noise caused due to motions of a plurality of resin blocks running one after another, and the pitch noise is a so-called high frequency sound. They noticed that high frequency sound generally has characteristics of high linearity and weak transmission. The claimed invention employs a relationship between an air passage for cooling a belt chamber and a reduction of high frequency sounds.

In an embodiment of the invention, the air passage of the motorcycle extends rearward from the transmission casing passing over the frame member, and is a long air passage. Therefore, noise of the belt type continuously variable transmission occurred in the belt chamber is damped inside the air passage before it reaches outside. Consequently, noise released outside from the air passage is reduced to a relatively low level. The air passage has the curving part curving at a part around the frame member. Thereby, an interruption between the air passage and the frame member can be prevented, and a linear travel of a high frequency sound, which has a high tendency to travel linearly, can be prevented. Accordingly, the motorcycle can effectively prevent high frequency sound that is considered to be a major cause of noise. Therefore, the motorcycle can effectively prevent noise caused by the resin block belt.

An embodiment of the present invention can provide a noise preventing means suitable for the motorcycle including a belt type continuously variable transmission having a resin block belt.

### BRIEF DESCRIPTION OF THE DRAWINGS

Embodiments of the present invention will be described hereinafter, by way of example only, with reference to the drawings.
FIG. 1 is a side view of a motorcycle according to a first embodiment.
FIG. 2 is a perspective view viewing a vehicle body frame from the left front.
FIG. 3 is a right side view showing a part of the motorcycle according to the first embodiment.
FIG. 4 is a plan view showing a part of the motorcycle according to the first embodiment.
FIG. 5 is a cross sectional view of an engine unit.
FIG. 6(a) is a cross sectional view of a resin block belt, and (b) is a side view of the resin block belt.
FIG. 7 is a perspective view of a second case block and an inner case.
FIG. 8 is an enlarged cross sectional view showing a vicinity of a centrifugal clutch in FIG. 5.
FIGs. 9a and 9b show a part of the motorcycle according to a second embodiment, in which FIG. 9a is a plan view, and FIG. 9b is a right side view.
FIGs. 10a and 10b show a part of the motorcycle according to a third embodiment, in which FIG. 10a is a plan view, and FIG. 10b is a right side view.
FIGs. 11a and 11b show a part of the motorcycle according to a fourth embodiment, in which Fig. 11a is a plan view, and FIG. 11b is a right side view.
FIGs. 12a and 12b show a part of the motorcycle according to a fifth embodiment, in which FIG. 12a is a plan view, and FIG. 12b is a right side view.
FIGs. 13a and 13b show a part of the motorcycle according to a sixth embodiment, in which FIG. 13a is a plan view, and FIG. 13b is a right side view.
FIGs. 14a and 14b show a part of the motorcycle according to a seventh embodiment, in which FIG. 14a is a plan view, and FIG. 14b is a right side view.
FIGs. 15a and 15b show a part of the motorcycle according to an eighth embodiment, in which FIG. 15a is a plan view, and FIG. 15b is a right side view.

### DETAILED DESCRIPTION

Example embodiments of the present invention will be described hereinafter in detail with reference to the drawings.

### First Embodiment

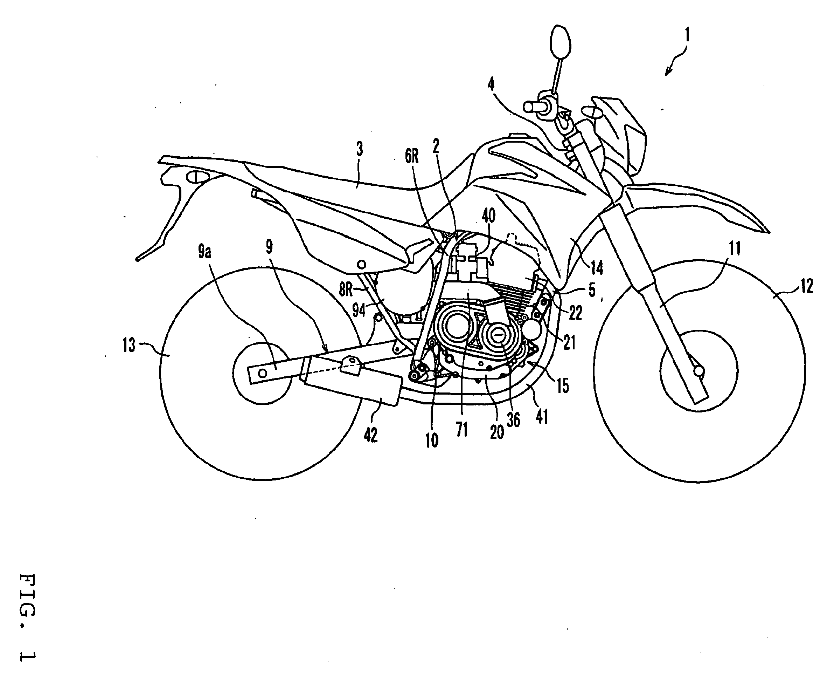

As shown in FIG.1, a straddle type vehicle according to this embodiment is a motorcycle 1. The motorcycle 1 includes a vehicle body frame 2 for composing a skeletal structure, and a seat 3 on which a rider (or driver) sits. The motorcycle 1 is a so-called off-road type motorcycle. However, a motorcycle according to the present invention is not limited to this, but can be a motorcycle other than an off-road type (such as on-road type, scooter type, or so-called moped type motorcycle). In addition, the directions of front and rear, and right and left, are the directions in the view of a rider sitting on the seat 3 in the following descriptions.

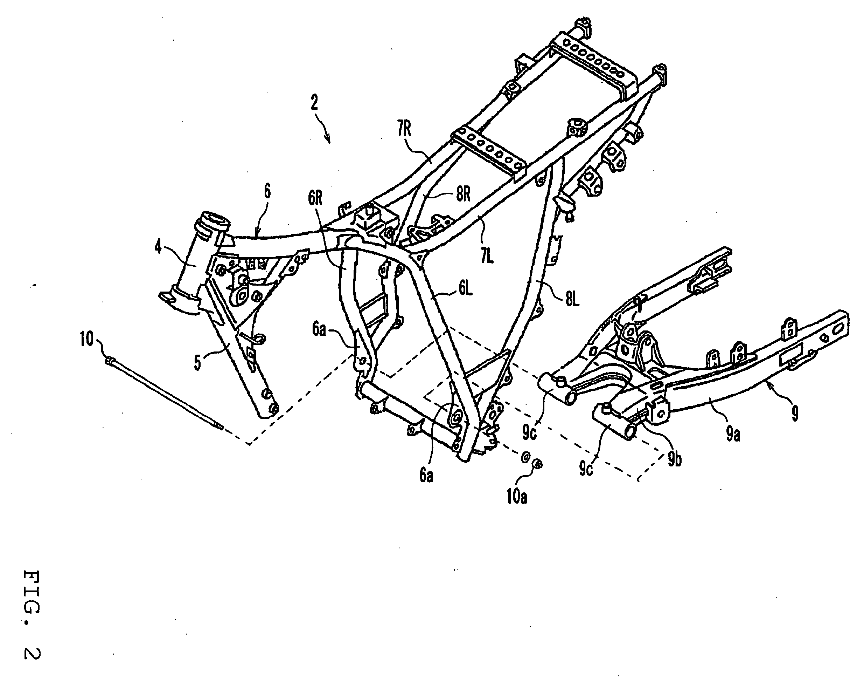

FIG. 2 is a perspective view viewing the vehicle body frame 2 from the left front. As shown in FIG. 2, the vehicle body frame 2 includes a head pipe 4, a down tube 5 extending downward from the head pipe 4, and a main tube 6 extending rearward from the head pipe 4 above the down tube 5. The main tube 6 extends rearward from the head pipe 4. A midway part of the main tube 6 bifurcates into a left seat pillar 6L extending leftward and a right seat pillar 6R extending rightward. These seat pillars 6L and 6R are formed into a generally transversely symmetrical shape, and make a pair. Each of the seat pillars 6L and 6R curves in the rear of the bifurcating part, and extends downward.

Seat rails 7L and 7R are connected to vicinities of the curving parts of the respective seat pillars 6L and 6R. The seat rails 7l and 7R extend rearward. Rear ends of buckstays 8L and 8R are connected to the respective seat rails 7L and 7R. Front ends of the buckstays 8L and 8R are connected to bottom ends of the respective seat pillars 6L and 6R. A pivot part 6a into which a pivot shaft 10 mentioned below is inserted is provided at a bottom end of each of the seat pillars 6L and 6R. A rear arm 9 described below is coupled to the pivot part 6a.

The rear arm 9 includes a generally U-shaped arm part 9a formed to open rearward, and a generally U-shaped coupling part 9b formed to open forward. A pipe 9c is provided on an end of each of right and left branches of the coupling part 9b. The pivot shaft 10 mentioned above passes through the right and left pivot parts 6a and the right and left pipes 9c. Thereby, the rear arm 9 is swingably coupled to the bottom ends of the seat pillars 6L and 6R via the pivot shaft 10. In this embodiment, the pivot shaft 10 is formed with a long bolt, and a left end of the pivot shaft 10 is fixed by a nut 10a.

A front fork 11 (see FIG. 1) is inserted into the head pipe 4. As shown in FIG. 1, a front wheel 12 is supported by the front fork 11. A rear wheel 13 is supported by a bottom part of the arm part 9a of the rear arm 9. Also, a cover 14 for covering the vehicle body frame 2 is disposed above the vehicle body frame 2. The seat 3 mentioned above is disposed slightly more rearward than a center of the cover 14.

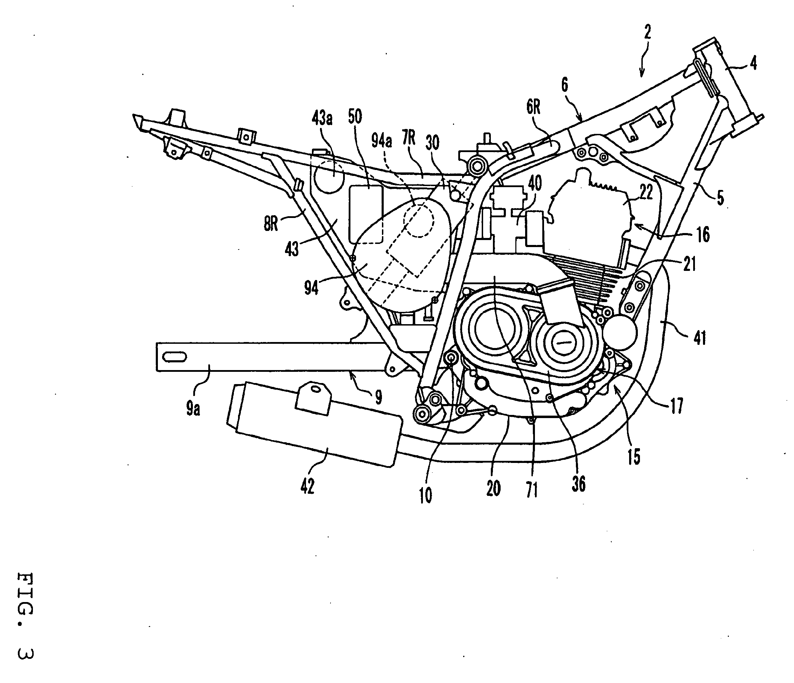

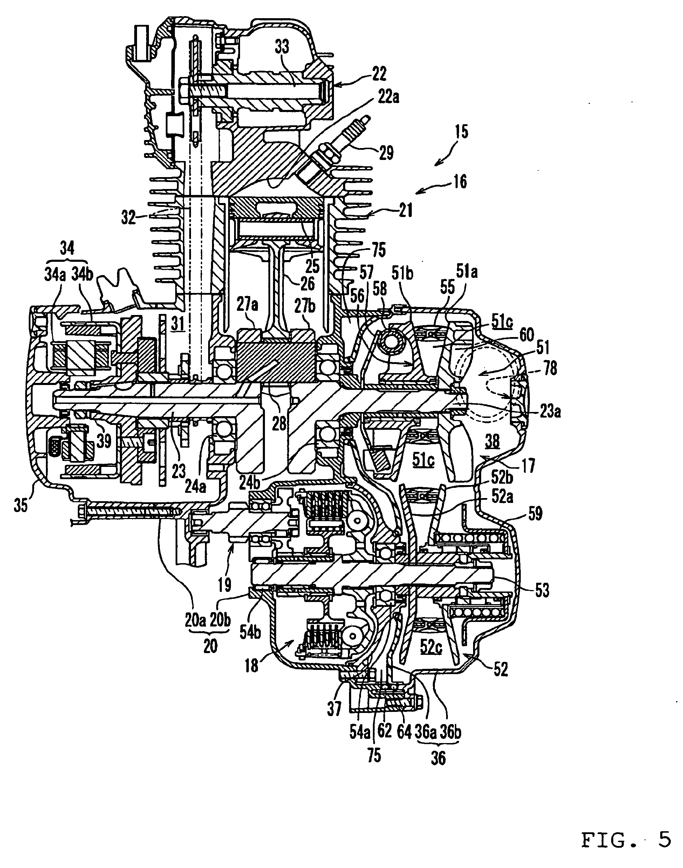

FIG. 3 is a right side view showing a part of FIG. 1 (a construction of each part around the vehicle body frame 2). As shown in FIG. 3, an engine unit 15 for driving the rear wheel 13 (see FIG. 1) is suspended on the vehicle body frame 2. Specifically, the engine unit 15 is disposed among the down tube 5 and the seat pillars 6L and 6R, and fixed to the down tube 5 and each of the seat pillars 6L and 6R. The engine unit 15 includes an engine 16 and a belt type continuously variable transmission 17 (hereinafter referred to as CVT 17) (see FIG. 5). This part will be described in detail below. The engine 16 includes a crankcase 20, a cylinder 21, and a cylinder head 22. The CVT 17 is housed in a transmission casing 36 connected to the crankcase 20.

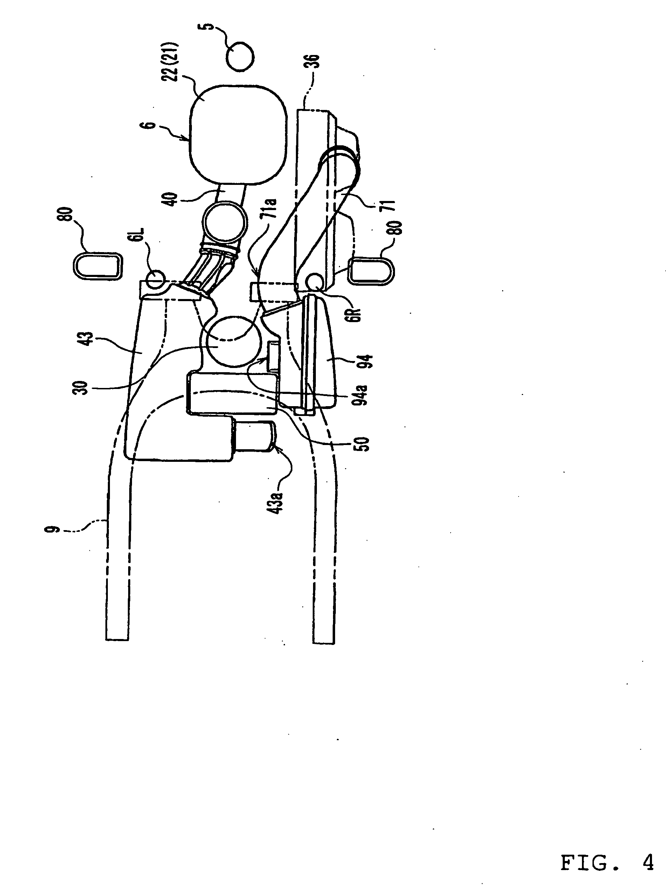

FIG. 4 is a plan view showing a layout around the seat pillars 6L and 6R. As shown in FIG. 4, rear cushion unit 30 is provided at a center in the vehicle width direction. As shown in FIG. 3, the rear cushion unit 30 is provided in a manner such that it is positioned between the main tube 6 and the rear arm 9 and couples the main tube 6 and the rear arm 9 together. The motorcycle 1 of this embodiment includes only one rear cushion unit 30, and has a so-called mono suspension construction. In addition, the rear cushion unit 30 is not limited to a rear cushion unit directly coupled to the rear arm 9, but can be a rear cushion unit coupled to the rear arm 9 via a link.

An end of an intake duct 71 for inducting cooling air into a belt chamber 38 (see FIG. 5) in the transmission casing 36 is connected to a front half part of the transmission casing 36. In a right side view as shown in FIG. 3, the intake duct 71 extends upward from the transmission casing 36, then curves, and extends rearward passing over the seat pillar 6R. An air chamber 94 is connected to a rear end of the intake duct 71. An air filter (not shown) is disposed inside the air chamber 94. The whole of the intake duct 71 and the air chamber 94 forms an example of an air passage.

As shown in FIG. 4, the intake duct 71 extends rearward passing through a space between the left seat pillar 6L and the right seat pillar 6R. Also, the intake duct 71 passes through a space between the cylinder 21 of the engine 16 and the seat pillar 6R, and a space between the rear cushion unit 30 and the seat pillar 6R. The intake duct 71 has a curving part 71a curving at a part around the seat pillar 6R.

In the plan view shown in FIG. 4, foot rests 80 as foot supporting members for supporting the feet of a rider are provided outside the seat pillars 6L and 6R. The curving part 71a mentioned above is positioned at a part inside an inner end of the seat pillar 6R in the vehicles width direction, that is, positioned on the left of the seat pillar 6R. Thereby, the intake duct 71 passes through a space inside the foot rest 80. Meanwhile, a part of the intake duct 71 (a part in a vicinity of a connection part where the intake duct 71 connects to the transmission casing 36) is positioned outside the seat pillar 6R in the vehicle width direction, that is, positioned on the right of the seat pillar 6R.

An intake opening 94a for inducting fresh air into the air chamber 94 is provided on an inner end surface (a left side surface) of the air chamber 94 in the vehicle width direction. The intake opening 94a is positioned below the seat 3 (see FIG. 1). As shown in FIG. 3, the intake opening 94a is positioned above the pivot shaft 10. Further, the intake opening 94a of the air chamber 94 forms an example of an intake opening of the air passage.

An end of an intake pipe 40 for supplying air to the engine 16 is connected to a rear side of the cylinder head 22 of the engine 16. The intake pipe 40 passes through a space between the seat pillar 6L and the seat pillar 6R (see FIG. 4), and extends leftward and rearward. An air chamber 43 is connected to a rear end of the intake pipe 40. An intake opening 43a for inducting fresh air into the air chamber 43 is provided on an inner end surface (a right side surface) of the air chamber 43 in the vehicle width direction. The intake opening 43a is positioned below the seat 3 (see FIG. 1).

Meanwhile, as shown in FIG.3, an exhaust pipe 41 is connected to a front side of the cylinder head 22. The exhaust pipe 41 extends forward and obliquely rightward and downward from the cylinder head 22, then curves rearward, passes through a space below the transmission casing 36 of the engine unit 15, and further extends rearward. A muffler 42 is connected to a rear end of the exhaust pipe 41. The muffler 42 is disposed on the right of the rear wheel 13 (see FIG. 1).

As shown in FIG. 4, a battery 50 is provided in the rear of the rear cushion unit 30 and between the air chamber 43 and the air chamber 94. The battery 50 is disposed below the seat 3 (see FIG. 1).

FIG. 5 shows a cross section of the engine unit 15. As shown in FIG. 5, the engine unit 15 includes the engine 16, the CVT 17, a centrifugal clutch 18, and a speed reduction mechanism 19. Here, the engine 16 is a four cycle single cylinder engine. However, the engine 16 in an example embodiment of the present invention can be a two cycle engine for example, or a multi-cylinder engine.

The engine 16 includes the crankcase 20, the cylinder 21 connected to the crankcase 20, and the cylinder head 22 connected to the cylinder 21. The crankcase 20 has two separate case blocks, that is, a first case block 20a positioned on the left and a second case block 20b positioned on the right. The first case block 20a and the second case block 20b are facing each other in the vehicle width direction.

A crankshaft 23 is housed in the crankcase 20. The crankshaft 23 extends in the vehicle width direction and is disposed horizontally. The crankshaft 23 is supported by the first case block 20a via a bearing 24a, and supported by the second case block 20b via a bearing 24b.

A piston 25 is slidably inserted into the cylinder 21. An end of a connecting rod 26 is connected to the piston 25. A crankpin 28 is provided between a left crank arm 27a and a right crank arm 27b of the crankshaft 23. The other end of the connecting rod 26 is coupled to the crankpin 28.

A concaving part 22a, and an intake port and an exhaust port communicatively connected to the concaving part 22a, that are not shown, are formed in the cylinder head 22. An ignition plug 29 is inserted into the cylinder head 22. The intake pipe 40 mentioned above (see FIGS. 1 and 3) is connected to the intake port. The exhaust pipe 41 mentioned above (see FIGs. 1 and 3) is connected to the exhaust port.

As shown in FIG. 5, a cam chain chamber 31 for connecting an inside of the crankcase 20 and an inside of the cylinder head 22 together is formed at a left part inside the cylinder 21. A timing chain 32 is disposed in the cam chain chamber 31. The timing chain 32 is wound around the crankshaft 23 and a camshaft 33. The camshaft 33 rotates following a rotation of the crankshaft 23, and opens or closes an intake valve or an exhaust valve, which are not shown.

A generator case 35 for accommodating a generator 34 is mounted on the left side of a front half part of the first case block 20a. The transmission casing 36 for accommodating the CVT 17 is mounted on the right side of the second case block 20b. An opening is formed on the right side of a rear half part of the second case block 20b. This opening is blocked by a clutch cover 37.

The transmission casing 36 is formed independently from the crankcase 20, and is constructed with an inner case 36a for covering an inner part (a left part) of the CVT in the vehicle width direction and an outer case 36b for covering an outer part (a right part) of the CVT 17 in the vehicle width direction. The inner case 36a is mounted on the right side of the crankcase 20. The outer case 36b is mounted on the right side of the inner case 36a. A belt chamber 38 for accommodating the CVT 17 is formed in a space formed between the inner case 36a and the outer case 36b. An intake opening 78 is formed on a top surface of the outer case 36b. The intake duct 71 mentioned above (see FIGs. 1 and 3) is connected to the intake opening 78.

A right end of the crankshaft 23 passes through the second case block 20b and the inner case 36a, and extends to the belt chamber 38. A primary sheave 51 of the CVT 17 is fitted in the right end of the crankshaft 23. Therefore, the primary sheave 51 rotates following a rotation of the crankshaft 23. This right part of the crankshaft 23 (strictly, a part more rightward than the bearing 24b) forms a primary sheave shaft 23a.

Meanwhile, a left end of the crankshaft 23 passes through the first case block 20a, and extends into the generator case 35. The generator 34 is mounted at this left end of the crankshaft 23. The generator 34 includes a stator 34a and a rotor 34b facing the stator 34a. The rotor 34b is fixed to a sleeve 39 rotating together with the crankshaft 23. The stator 34a is fixed to the generator case 35.

A secondary sheave shaft 53 in which a secondary sheave 52 is fitted is disposed parallel to the crankshaft 23 in a rear half part in the crankcase 20. A right part of a center part of the secondary sheave shaft 53 is supported by the clutch cover 37 via a bearing 54a. A left part of the secondary sheave shaft 53 is supported by a left end of the second case block 20b via a bearing 54b. The secondary sheave 52 is coupled to a right end of the secondary sheave shaft 53.

The CVT 17 includes the primary sheave 51, the secondary sheave 52, and a V-belt 55 wound around the primary sheave 51 and the secondary sheave 52. As mentioned above, the primary sheave 51 is mounted on the right side of the crankshaft 23. The secondary sheave 52 is coupled to a right part of the secondary sheave shaft 53.

The primary sheave 51 includes a fixed sheave half body 51a positioned outside in the vehicle width direction, a movable sheave half body 51b positioned inside in the vehicle width direction and facing the fixed sheave half body 51a. The fixed sheave half body 51a is fixed to a right part of the primary sheave shaft 23a, and rotates together with the primary sheave 23a. The movable sheave half body 51b is disposed on the left side of the fixed sheave half body 51a, and slidably mounted on the primary sheave shaft 23a. Therefore, the movable sheave half body 51b rotates together with the primary sheave 23a, and is slidable in the axis direction of the primary sheave shaft 23a. A belt groove 51c is formed between the fixed sheave half body 51a and the movable sheave half body 51b. A cam surface 56 is formed on the left side of the movable sheave half body 51b. A cam plate 57 is disposed on the left side of the cam surface 56. A roller weight 58 is disposed between the cam surface 56 of the movable sheave half body 51b and the cam plate 57.

The secondary sheave 52 includes a fixed sheave half body 52a positioned inside in the vehicle width direction and a movable sheave half body 52b positioned outside in the vehicle width direction and facing the fixed sheave half body 52a. The movable sheave half body 52b is mounted on a right part of the secondary sheave shaft 53. The movable sheave half body 52b rotates together with the secondary sheave shaft 53, and is slidable in the axis direction of the secondary sheave shaft 53. A compression coil spring 59 is provided on the right side of the secondary sheave 52. The movable sheave half body 52b receives a leftward pressure from the compression coil spring 59. An axis part of the fixed sheave half body 52a is a cylindrical slide collar, and is spline-fitted into the secondary sheave shaft 53. A V-shaped belt groove 52c is formed between the fixed sheave half body 52a and the movable sheave half body 52b.

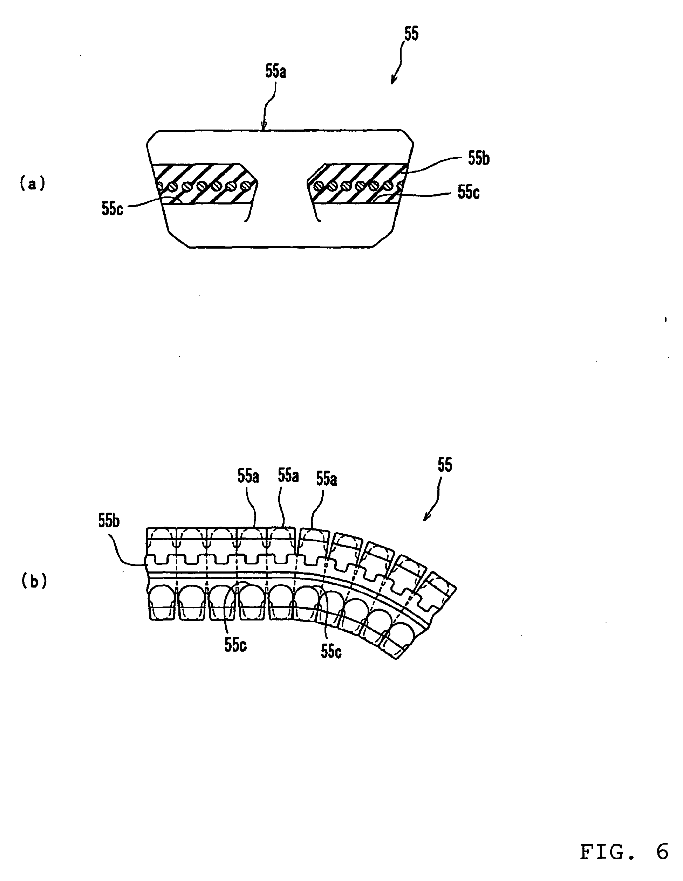

As shown in FIG. 6, the V-belt 55 includes a plurality of resin blocks 55a formed into a shape such that a letter H is rotated by a right angle and a pair of coupling members 55b for coupling the plurality of the resin blocks 55a together. The coupling member 55b is fitted in a concaving part 55c formed from a side surface of the resin block 55a toward a center part, and extends in a direction that the resin blocks 55a are arrayed as shown in FIG. 6(b). As shown in FIG. 6(a), a cross section of the resin block 55a is formed into a shape such that a letter H is rotated by a right angle. The resin block 55a is also formed into a V-shape, and thereby it is formed to match the V-shapes of the belt groove 51c of the primary sheave 51 and the belt groove 52c of the secondary sheave 52 (see FIG. 5).

As shown in FIG. 5, a plurality of impellers 60 are formed at a right part of the fixed sheave half body 51a of the primary sheave 51. Also, as mentioned above, the intake duct 71 (see FIG. 1) is connected to the intake opening 78 formed on a top surface of the transmission casing 36. Further, the intake opening 78 is formed on the front half part (above the primary sheave 51) of the transmission casing 36. Therefore, the intake duct 71 is connected to a part more forward than a rear end of the primary sheave 51.

With such a construction, when the fixed sheave half body 51a rotates together with the primary sheave shaft 23a, the impellers 60 induct air into the belt chamber 38 through the intake opening 78, and also air inside the belt chamber 38 is discharged outside. In this embodiment, the impellers 60 are formed to helically extend outside in the diameter direction from a center part of the fixed sheave half body 51a. However, a shape of the impeller 60 is not limited to any specific shape, and a number of the impellers is not limited to a specific number either. In addition, impellers as a body separated from the fixed sheave half body 51a can be provided outside the fixed sheave half body 51a.

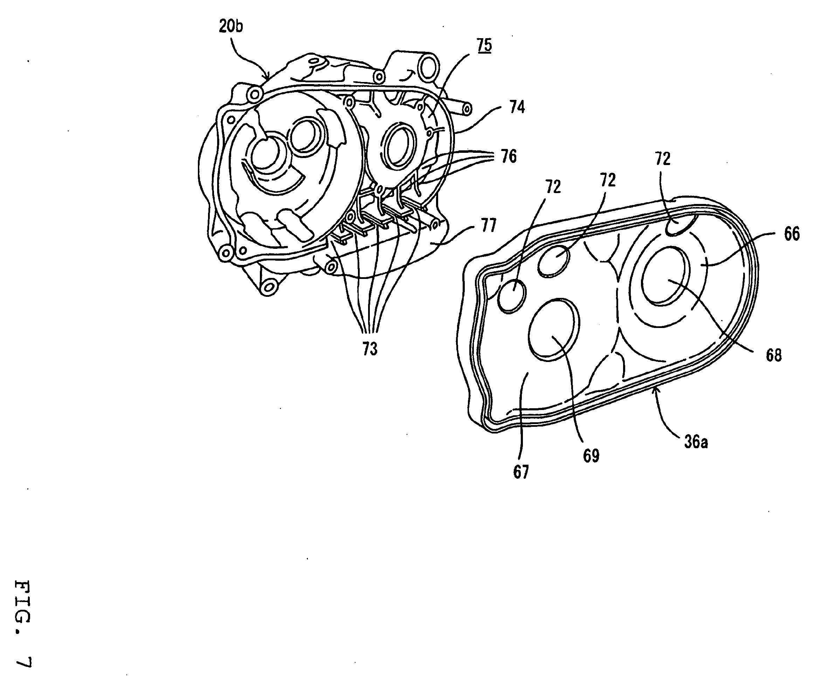

FIG. 7 is a perspective view of the second case block 20b and the inner case 36a. As shown in FIG. 7, a front half part 66 of the inner case 36a is formed into a bowl shape swelling out leftward. A rear half part of the inner case 36a is formed into a bowl shape swelling out rightward. A hole 68 for inserting the primary sheave shaft 23a (see FIG. 5) of the CVT 17 is formed on the front half part 66. A hole 69 for inserting the secondary sheave shaft 53 (see FIG. 5) of the CVT 17 is formed on the rear half part 66. In FIG. 7, the clutch cover 37 (see FIG. 5) interposed between the inner case 36a and the second case block 20b is not shown.

Ventilation ports 72 are provided on the inner case 36a. In this embodiment, the ventilation port is formed into a circular shape. Three ventilation ports are formed in positions upper than a vertical center of the inner case 36a. However, a shape of the ventilation port is not limited at all. A position of the ventilation port is not necessarily limited to an upper part of the inner case 36a. In this embodiment, the ventilation port 72 is provided on each of the front half part 66 and the rear half part 67 of the inner case 36a. However, the ventilation port 72 can be formed on only either one of the front half part 66 and the rear half part 67. A number of the ventilation port 72 is not specifically limited either.

A plurality of ventilation ports 73 are formed at a lower right part of the second case block 20b. Specifically, the second case block 20b includes a periphery part 74 installed upright rightward. This periphery part 74 has a shape corresponding to an outline shape of the transmission casing 36. Further, a lower part of the periphery part 74 has a notched part, in which the notches are formed as slits. Namely, it is formed into a so-called comb shape. Therefore, a space 75 divided demarcated by the second case block 20b and the inner case 36a is communicatively connected to an outside of the engine unit 15 (see FIG. 5) through the ventilation ports 75. In addition, because a right part of the rear half part of the second case block 20b is covered by the clutch cover 37, the space 75 is formed between the clutch cover 37 and the inner case 36a in the rear half part of the second case block 20b (see FIG. 5).

Reinforcement ribs 76 are provided on the comb-shaped part of the periphery part 74. An oil pan 77 is provided below the ventilation ports 73.

With the above construction, air in the belt chamber 38 is introduced into the space 75 through the ventilation ports 72 of the inner case 36a, and further discharged toward the oil pan 77 through the ventilation ports 73 of the second case block 20b. As a result, the air is discharged outside the engine unit 15.

As foregoing, in this embodiment, a lower part of the periphery part 74 of the second case block 20b is formed into a comb shape. This comb-shaped part forms a plurality of slit-like ventilation ports 73. However, a shape of the ventilation port 73 is not limited to a slit, but of course can be an opening shaped differently, such as a circular shape. A shape, a size, or a number of the ventilation port 73 of the second case block 20b is not specifically limited.

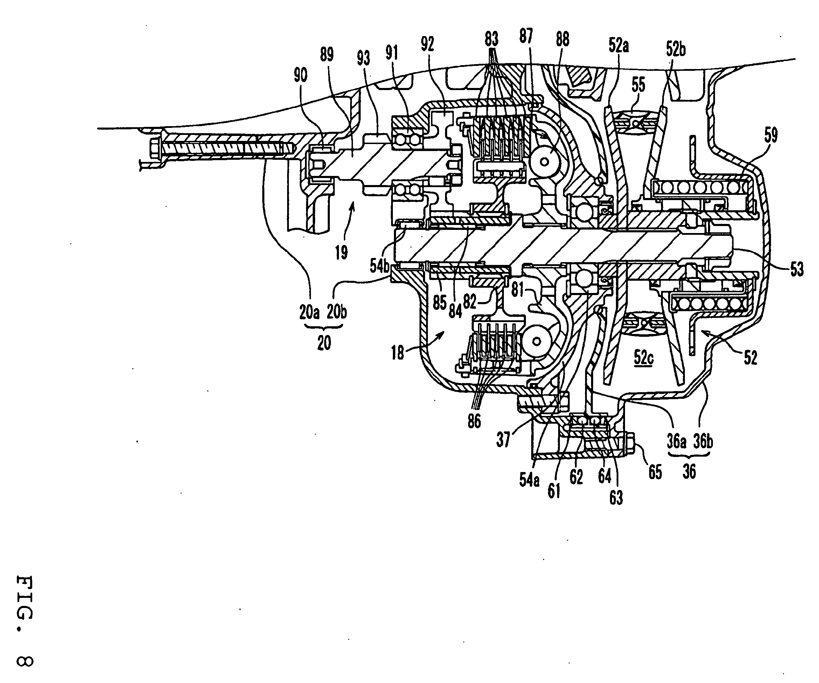

FIG. 8 is an enlarged drawing for showing a part of FIG. 5. As shown in FIG. 8, a sealing recess 61 is formed on the left side of the periphery part of the inner case 36a. A right periphery part of the second case block 20b is fitted in the sealing recess 61. An O-ring 62 is inserted in a space between the inner case 36a and the second case clock 20b in the sealing recess 61. A sealing recess 63 is formed on the right side of the periphery part of the inner case 36a. The periphery part of the outer case 36b is fitted in the sealing recess 63. An O-ring 64 is inserted in a space between the inner case 36a and the outer case 36b in the sealing recess 63. The outer case 36b and the second case block 20b are fastened together by a bolt 65 with the inner case 36a interposed between them.

The centrifugal clutch 18 is mounted on the left side of the secondary sheave shaft 53. The centrifugal clutch 18 is a wet type multiple disc type clutch, and includes a generally cylindrical clutch housing 81 and a clutch boss 82. The clutch housing 81 is spline-fitted in the secondary sheave shaft 53, and rotates integrally with the secondary sheave shaft 53. A plurality of ring-shaped clutch plates 83 is mounted in the clutch housing 81. Those clutch plates 83 are arranged in the axial direction of the secondary sheave shaft 53 at intervals.

A cylindrical gear 85 is rotatably fitted around a left part of the secondary sheave shaft 53 via a bearing 84. The clutch boss 82 is disposed inside in the redial direction of the clutch plate 83 and outside in the redial direction of the gear 85, and engages with the gear 85. Therefore, the gear 85 rotates together with the clutch boss 82. A plurality of ring-shaped friction plates 86 is mounted outside in the redial direction of the clutch boss 82. Those friction plates 86 are arranged in the axial direction of the secondary sheave shaft 53 at intervals. Each of the friction plates 86 is disposed between the neighboring clutch plates 83, 83.

A plurality of cam surfaces 87 is formed on the left side of the clutch housing 81. A roller weight 88 is disposed between the cam surfaces 87 and the rightmost clutch plate 83 facing the cam surfaces 87.

In the centrifugal clutch 18, a state of the clutch is automatically switched between a clutch-in state (an engaging) and a clutch-off state (a disengaging) corresponding to the amount of centrifugal force acting on the roller weight 88.

That is, as a rotational speed of the clutch housing 81 becomes a prescribed speed or more, the roller weight 88 receives a centrifugal force and moves outside in the radial direction. The roller weight 88 pushes the clutch plates 83 leftward. As a result, the clutch plates 83 is compressedly contacted with the friction plates 86. A driving force of the secondary sheave shaft 53 is transmitted through the centrifugal clutch 18 to an output shaft (not shown) . It is a clutch-in state.

Meanwhile, as a rotational speed of the clutch housing 81 becomes less than a prescribed speed, a centrifugal force acting on the roller weight 88 becomes small, and the roller weight 88 moves inside in the radial direction. As a result, the clutch plates 83 and the friction plates 86 are released from the compressed contact. Now, a driving force of the secondary sheave shaft 53 is not transmitted to the output shaft. It is a clutch-off state. In addition, the side lower than the secondary sheave shaft 53 shows a clutch-in state, and the upper side shows a clutch-out state in FIG. 8.

The speed reduction mechanism 19 is interposed between the centrifugal clutch 18 and the output shaft (not shown). The speed reduction mechanism 19 has a speed changing shaft 89 disposed parallel to the secondary sheave shaft 53. The speed changing shaft 89 is rotatably supported by the first case block 20a via a bearing 90. Also, the speed changing shaft 89 is rotatably supported by the second case block 20b via a bearing 91. A first speed changing gear 92 for engaging with the gear 85 is provided at a right end of the speed changing gear 89.

A second speed changing gear 93 with a diameter smaller than the first speed changing gear 92 is provided at a center part of the speed changing shaft 89. The second speed changing gear 93 is disposed to engage with an output shaft not shown or a gear provided on the output shaft, which is not shown.

With such a construction, the clutch boss 82 and the output shaft are coupled via the gear 85, the first speed changing gear 92, the speed changing shaft 89, the second speed changing gear 93, and so forth. Therefore, the output shaft rotates following a rotation of the clutch boss 82. In addition, although not shown, a drive transmission mechanism such as a chain for transmitting a drive of the output shaft to the rear wheel 13 (see FIG. 1) is wound around the output shaft. A drive conversion mechanism can be a member other than a chain, such as a transmission belt, a gear mechanism combining a plurality of gears, and a drive shaft.

The foregoing is the construction of the engine unit 15. Next, a cooling operation of the CVT will be described.

When the engine unit 15 operates, the primary sheave shaft 23a of the CVT 17 rotates, and the impellers 60 of the fixed sheave half body 51a of the primary sheave 51 rotate together with it. As a result, a suction force inducting air from the intake duct 71 into the belt chamber 38 is generated.

Accordingly, air is inducted into the air chamber 94 through the intake opening 94a (see FIG. 4). The air passes through the filter (not shown) and is cleaned up, and then the air is inducted into the belt chamber 38 through the intake duct 71. The air inducted into the belt chamber 38 flows through spaces around the primary sheave 51, the secondary sheave 52, and the V-belt 55, and cools down the primary sheave 51, the secondary sheave 52, and the V-belt 55.

The air cooled down the primary sheave 51, the secondary sheave 52, and the V-belt is discharged from the belt chamber 38 through ventilation ports 72 of the inner case 36a. The air flows into the space 75 between the inner case 36a and the second case block 20b (see FIG. 7). The air in the space 75 is discharged outside through the ventilation ports 73 formed at the lower part of the second case block 20b. With the above air flow, the CVT 17 is continuously and regularly cooled down.

As foregoing, in the motorcycle 1 in this embodiment, the intake duct 71 forming a part of the intake passage (air passage) extends rearward from the transmission casing 36 passing over the seat pillar 6R in a side view. Therefore, the intake passage is elongated in the motorcycle 1. Meanwhile, the elongated intake passage may interrupt with the vehicle body frame 2. However, in this embodiment, the intake duct 71 has the curving part 71a curving at a part around the seat pillar 6R. The intake duct 71 curves keeping clear of the seat pillar 6R. Therefore, an interruption between the intake duct 71 and the seat pillar 6R is prevented.

With this embodiment, noise of the CVT 17, which occurs inside the belt chamber 38, is damped largely while passing through the intake duct 71 because the intake duct 71 is long. Also, as mentioned above, a major factor of noise occurring in the CVT 17 is pitch noise due to a large number of the resin blocks 55a included in the V-belt 55. Pitch noise is a high frequency sound, and highly tends to travel linearly. Therefore, pitch noise is largely attenuated at the curving part 71a of the intake duct 71 when the pitch noise passes through the intake duct 71. Accordingly, noise of the CVT 17 released outside is sufficiently prevented because of a synergetic effect between a large length of the intake duct 71 and inclusion of the curving part 71a.

Generally, it is preferable that an air passage should not have a curving part in the view of ventilation such as smooth introduction or discharge of air. However, in this embodiment, the curving part 71a is provided in the intake duct 71 on purpose, and thereby it prevents high frequency sounds, which have a high tendency to travel straight, from leaking outside.

As shown in FIG. 5, in this embodiment, the intake opening 78 to which the intake duct 71 is connected is formed at the front half part of the transmission casing 36 (above the primary sheave 51). Therefore, the intake duct 71 is connected to a part more forward than the rear end of the primary sheave 51. Thereby, a length of the intake duct 71 extending rearward can be larger. Therefore, noise of the CVT 17 can be more effectively prevented with the motorcycle 1.

A pair of the right and left seat pillars 6R and 6L are provided in the motorcycle 1. A part of the engine unit 15 is supported by both the seat pillars 6R and 6L. Therefore, a rigidity of the vehicle body frame 2 can be enhanced. On the other hand, because the seat pillars 6L and 6R are provided on the right and on the left as a pair, the seat pillars 6L and 6R protrude in the vehicle width direction. However, with this embodiment, the intake duct 71 passes through a space between the left seat pillar 6L and the right seat pillar 6R. Thereby, noise of the CVT 17 can be prevented, and also the motorcycle 1 can be intended to be slimly formed.

In the motorcycle 1, the right and left foot rests 80 are disposed outside of the respective seat pillars 6L and 6R in the vehicle width direction. However, the intake duct 71 passes through a space between the seat pillars 6L and 6R. Therefore, although the intake duct 71 extends rearward passing over the seat pillar 6R, the intake duct 71 does not disturb the feet of a rider on the foot rests 80.

Also, in this embodiment, the intake duct 71 extends more rearward than the seat pillar 6R, and thus it facilitates a prevention of intrusion of muddy water and the like splashed up by the front wheel 12 into the intake duct 71.

The intake opening 94a of the air chamber 94 of the motorcycle 1 is positioned upper than the pivot shaft 10. Therefore, the intake opening 94a is positioned relatively away from the ground, and disposed in a position such that the intake opening 94a is not apt to induct water and dust. The intake opening 94a is positioned below the seat 3. A part above the intake opening 94a is covered by the seat 3 because of such a disposition. Thus, intrusion of water, dust and so forth into the air chamber 94 can be prevented. Therefore, the motorcycle 1 facilitates supply of fresh air into the belt chamber 38.

The intake duct 71 of the motorcycle 1 passes through a space between the cylinder 21 of the engine 16 and the seat pillar 6R. Also, the intake duct 71 passes through a space between the left seat pillar 6L and the right seat pillar 6R. Further, the intake duct 71 passes through a space between the rear cushion unit 30 and the seat pillar 6R. Therefore, a space between the seat pillar 6L and the seat pillar 6R, a space between the cylinder 21 and the seat pillar 6R, and a space between the rear cushion unit 30 and the seat pillar 6R can be effectively used as spaces for providing the air passage. Accordingly, the motorcycle 1 can certainly provide a sufficient space for disposing the air passage without making the vehicle larger. As a result, it can realize an air passage having a sufficient cross sectional area of a flow passage.

As mentioned above, the curving part 71a of the intake duct 71 is positioned inside the inner end of the seat pillar 6R in the vehicle width direction, that is, positioned left of the sear pillar 6R. Meanwhile, a part of the intake duct 71 (a part in a vicinity of the connection part where the intake duct 71 connects to the transmission casing 36) is positioned outside the seat pillar 6R in the vehicle width direction, that is, positioned right of the seat pillar 6R. In other words, the intake duct 71 reaches a part inside the seat pillar 6R from the part outside the seat pillar 6R in the vehicle width direction. The intake duct 71 largely curves. Therefore, a high frequency sound occurring in the CVT 17 can be more effectively prevented with the motorcycle 1 of this embodiment.

As shown in FIG. 5, in this embodiment, an end (a right end) of the primary sheave shaft 23a is positioned inside an end (a right end) of the secondary sheave shaft 53 in the vehicle width direction. Thus, the primary sheave 51 has a more space on a lateral side of its sheave shaft comparing with a space that the secondary sheave 52 has. The intake duct 71 is connected to a part of the transmission casing 36 closer to the primary sheave 51. That is, the intake duct 71 is connected to the part that has more space on its lateral side. Therefore, as shown in FIG. 4, such a connection can prevent a projection of the connection part between the intake duct 71 and the transmission casing 36 in a transverse direction, and thereby the motorcycle 1 can be facilitated to be slimmed down.

As shown in FIG. 3, in this embodiment, the exhaust pipe 41 of the engine 16 extends rearward passing through a space below the intake duct 71 and the transmission casing 36 of the CVT 17. Thus, an interruption between the exhaust pipe 41 and the intake duct 71 can be facilely prevented. Therefore, the intake duct 71 can curve without being interrupted by the exhaust pipe 41, and a sufficient length of the intake duct 71 can be assured.

### Second Embodiment

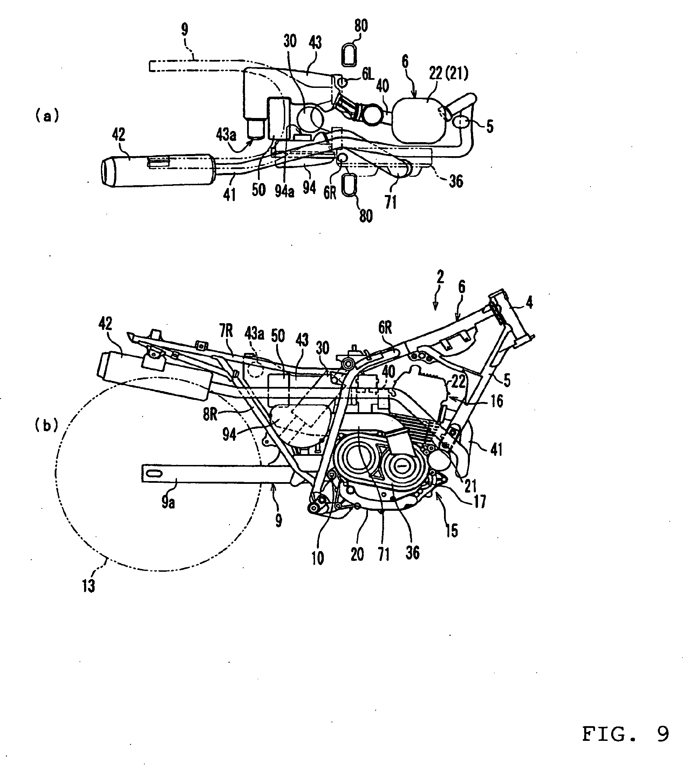

As shown in FIG. 3, in the first embodiment, the exhaust pipe 41 of the engine 16 extends forward and obliquely rightward downward, then curves rearward, passes through a space below the transmission casing 36 of the engine unit 15, and further extends rearward. However, as shown in FIGs. 9(a) and (b), in a second embodiment, a length of the air chamber 94 in the vertical direction is shortened to secure a space above the intake duct 71 and the air chamber 94, and thereby the exhaust pipe 41 passes through the space.

Specifically, the exhaust pipe 41 extends forward and obliquely rightward downward from the cylinder head 22, then curves rearward upward, passes through the space above the intake duct 71 and the air chamber 94, and further extends rearward. The muffler 42 is connected to a rear end of the exhaust pipe 41 similarly to the first embodiment. The muffler 42 is disposed on the right side above the rear wheel 13. Other parts of construction are almost the same as the first embodiment.

As foregoing, with this embodiment, the exhaust pipe 41 can be disposed above the intake duct 71 and the air chamber 94. Thereby, a sufficiently large space can be obtained below the frame 2.

### Third Embodiment

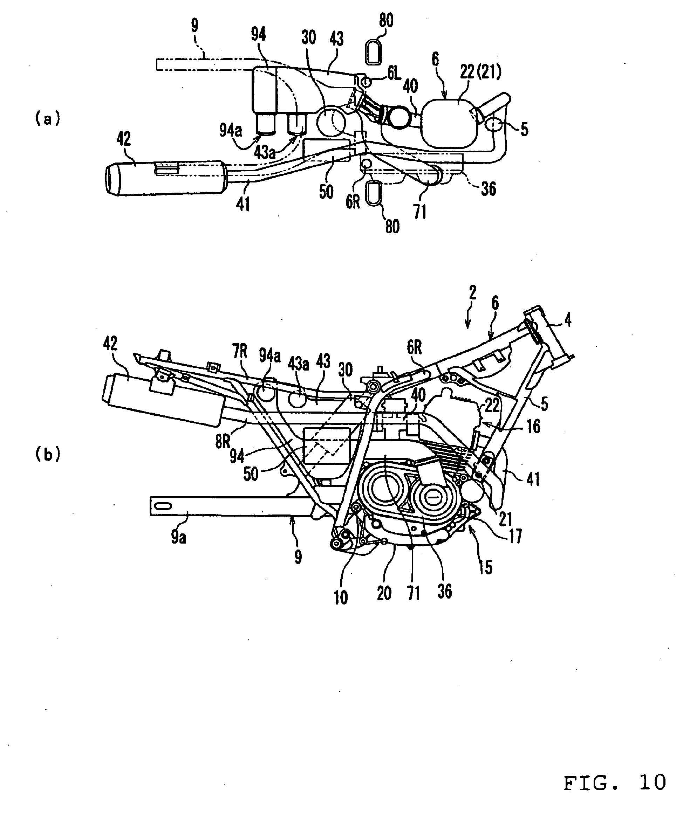

As shown in FIG. 4, in the first embodiment, the transmission casing 36 to which the front part of the intake duct 71 is connected, and the air chamber 94 forming the rear part of the air passage are disposed on the same side (the right side) in the vehicle width direction. However, as shown in FIGs. 10(a) and (b), in the third embodiment, the transmission casing 36 is disposed on the right side in the vehicle width direction, and the air chamber 94 is disposed on the opposite side, which is the left side, in the vehicle width direction.

With such dispositions of the air chamber 94 and the intake duct 71, in this embodiment, the air chamber 94 and the air chamber 43 are disposed on the same side (the left side) in the vehicle width direction. In this embodiment, the air chamber 94 and the air chamber 43 are formed into a united case body. Specifically, two spaces are formed inside a case body. That is, a case body is demarcated into a space for the air chamber 94 and a space for the air chamber 43. Also, in this embodiment, the rear end of the intake duct 71 is disposed on the left side in the vehicle width direction. Thereby, it makes a space on the opposite side, which is the right side. To effectively use this space, the battery 50 is disposed on the right side. Further, the exhaust pipe 41 of the engine 16 is disposed on the right side in the vehicle width direction and above the transmission casing 36 similarly to the second embodiment. Other parts of construction are almost the same as the first embodiment.

As foregoing, with this embodiment, the intake duct 71 extends from the right side to the left side in the vehicle width direction, and thereby the intake duct 71 can be made longer. The air chamber 94 and the air chamber 43 are formed into a united case body and are made more compact. This assures an obtainment of a large space above the transmission casing 36. Thereby, with this embodiment, the intake duct 71 can be largely curved. Therefore, with this embodiment, noise of the CVT 17 can be more effectively prevented.

Similarly to the second embodiment, the exhaust pipe 41 can be disposed in a space above the transmission casing 36, and thereby a sufficiently large space can be provided below the frame 2.

### Fourth Embodiment

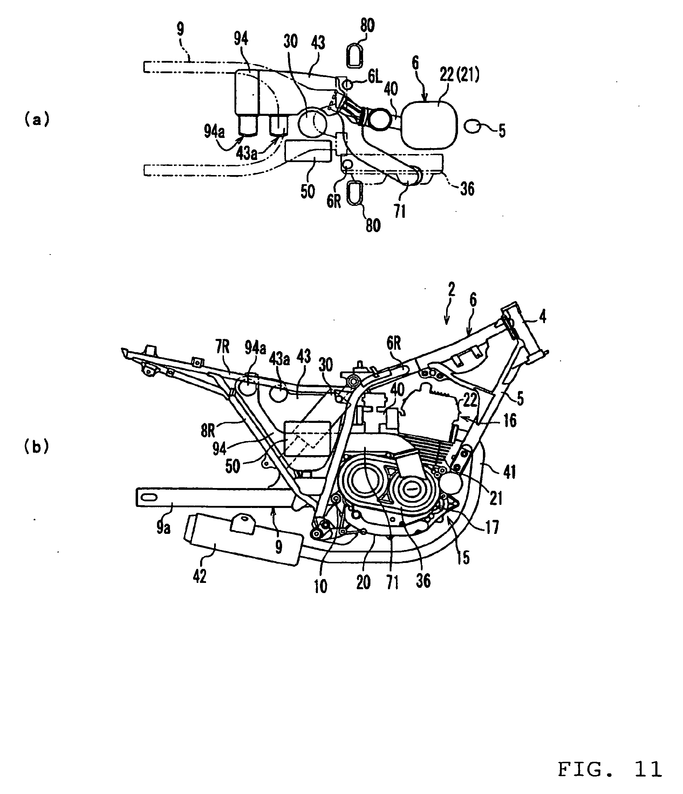

As shown in FIGs. 11(a) and (b), in this embodiment, the exhaust pipe 41 and the muffler 42 disposed above the transmission casing 36 in the third embodiment are disposed below the transmission casing 36, similarly to the first embodiment. With such a mode, the air passage for inducting air into the belt chamber 38 can be formed long, and noise can be prevented, similarly to all the embodiments described above. Also, with this embodiment, an interruption between the intake duct 71 and the exhaust pipe 41 and an interruption between the intake pipe 40 and the exhaust pipe 41 can be facilely prevented.

### Fifth Embodiment

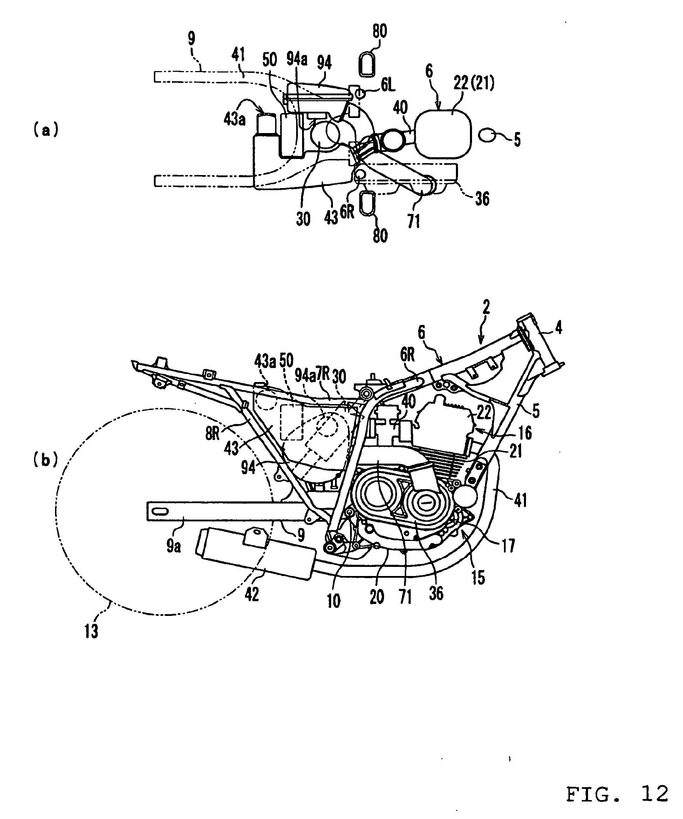

As shown in FIGs. 12(a) and (b), in the fifth embodiment, similarly to the third embodiment, the air chamber 94 to which the rear end of the intake duct 71 is connected is disposed on the left side in the vehicle width direction, which is the side opposite to the transmission casing 36. Corresponding to this disposition, the air chamber 43 of the engine 16 is disposed on the right side in the vehicle width direction, which is the side opposite to the air chamber 94. Other parts of construction are the same as the first embodiment.

With this embodiment, similarly to the third embodiment, the intake duct 71 extends from the right side to the left side in the vehicle width direction, and thus the intake duct 71 can be made long. Also, the intake duct 71 can be largely curved. Therefore, with this embodiment, noise of the CVT 17 can be effectively prevented also. The air chamber 43 is disposed on the side opposite to the air chamber 94 in the vehicle width direction, and thereby those parts can be laid out in a good balance. Therefore, with this embodiment, the air passage can be formed long without increasing a width of the vehicle. An interruption between the intake duct 71, the intake pipe 40 and the exhaust pipe 41 can be facilely prevented with this embodiment also.

### Sixth Embodiment

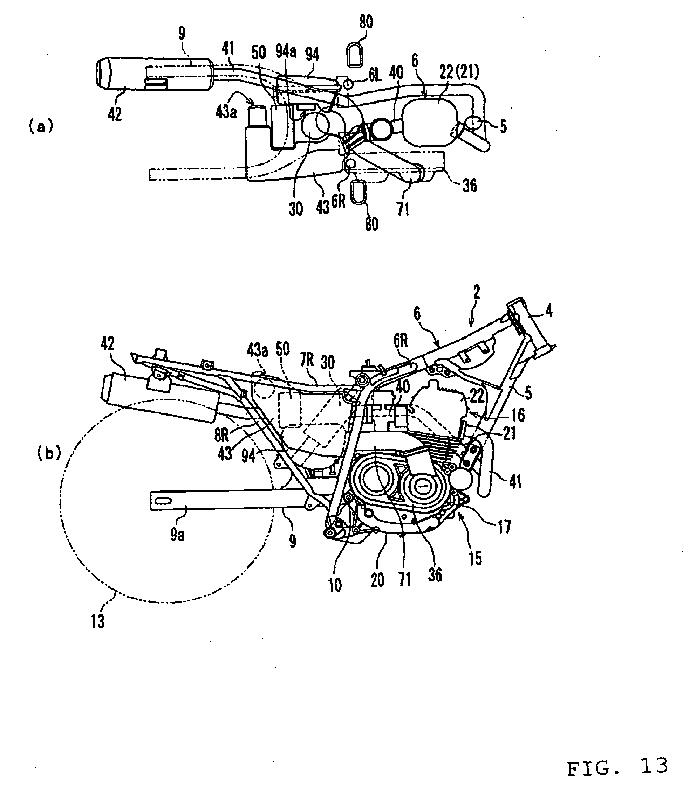

As shown in FIG. 12(b), in the fifth embodiment, the exhaust pipe 41 of the engine 16 extends forward and obliquely rightward downward from the cylinder head 22, then curves rearward, passes through a space below the transmission casing 36 of the engine unit 15, and further extends rearward. However, as shown in FIGs. 13(a) and (b), in the sixth embodiment, a vertical length of the air chamber 94 is shortened to assure a space above the air chamber 94. Thereby, the exhaust duct 41 passes through the space.

Specifically, the exhaust pipe 41 extends forward and obliquely leftward downward from the cylinder head 22, then curves rearward, passes through a space inside the seat pillar 6L and a space above the air chamber 94, and further extends rearward. The muffler 42 is connected to the rear end of the exhaust pipe 41. The muffler 42 is disposed on the left side above the rear wheel 13. Other parts of construction are almost the same as the fifth embodiment.

As foregoing, noise of the CVT 17 can be effectively prevented with this embodiment also. The exhaust pipe 41 is disposed above the air chamber 94, and thereby a sufficiently large space can be obtained below the frame 2.

### Seventh Embodiment

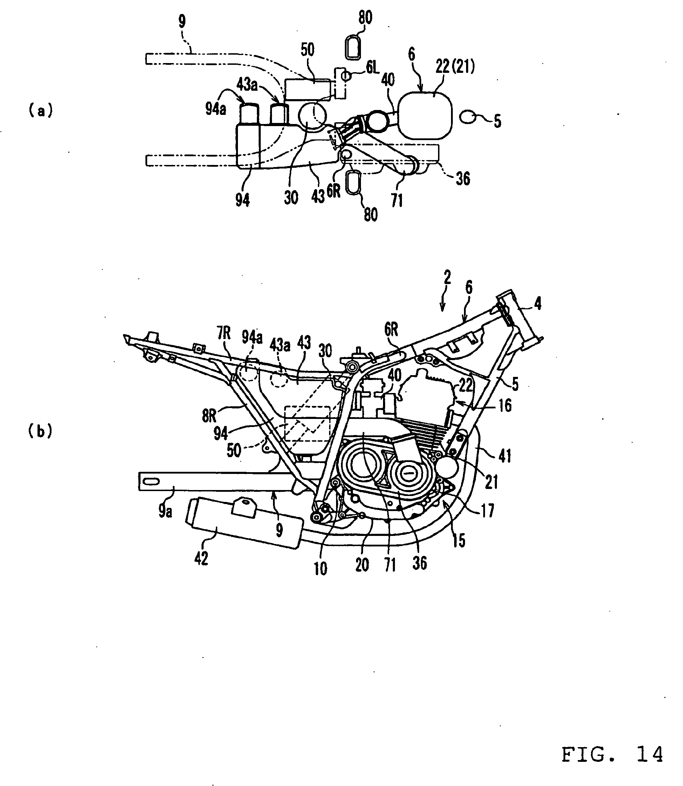

As shown in FIGs. 14(a) and (b), in the seventh embodiment, the air chamber 43 is disposed on the same side as the air chamber 94 (the right side) in the vehicle width direction, and the air chamber 43 and the air chamber 94 are formed into a united case body. Also, in this embodiment, the air chamber 43 is disposed on the right side in the vehicle width direction, and thereby a space is obtained on the left side. The battery 50 is disposed in this obtained space on the left side. Other parts of construction are almost the same as the first embodiment.

Noise of the CVT 17 can be effectively prevented with this embodiment also.

### Eighth Embodiment

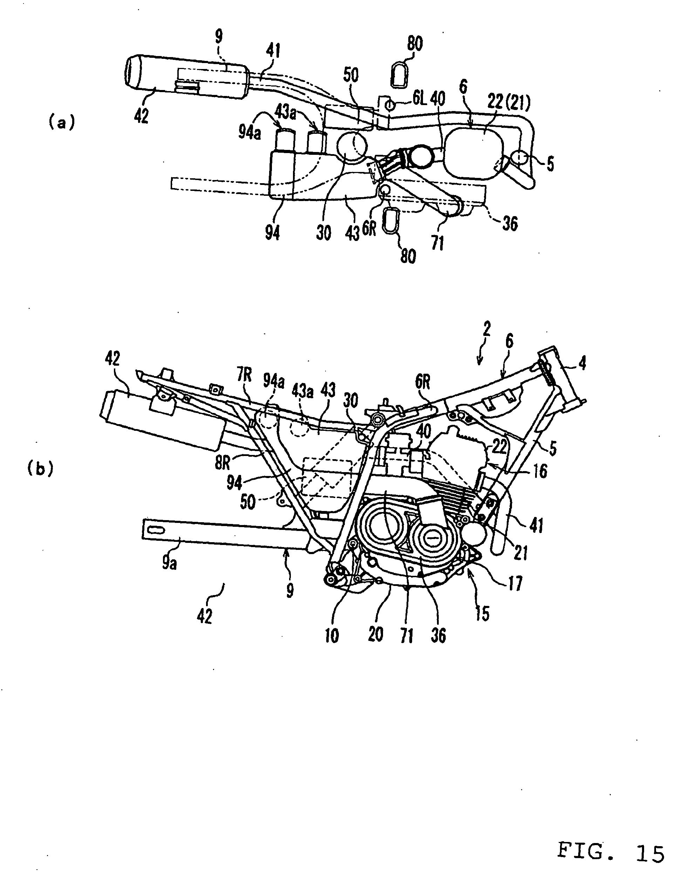

As shown in FIGs. 15(a) and (b), in this embodiment, the exhaust pipe 41 and the muffler 42 disposed below the transmission casing 36 in the seventh embodiment are disposed above the battery 50. With such a mode, similarly to each of the above embodiments, the air passage for inducting air into the belt chamber 38 can be formed long. Noise of the CVT 17 can be effectively prevented with this embodiment also.

In each of the above embodiments, the air passage is the intake passage for inducting air into the belt chamber 38, and this intake passage is constructed with the intake duct 71 and the air chamber 94. However, the air passage of an embodiment of the present invention is not limited to the above intake passage. The air passage of an embodiment of the present invention can be also an exhaust passage for discharging air from the belt chamber 38. The air passage of an embodiment of the present invention can be, for example, an exhaust passage including a duct 71 used as an exhaust duct, in which the duct 71 used as an intake duct in the above embodiments is used as the exhaust duct for discharging a cooling air inducted into the belt chamber 38. In such a case, a duct for an intake purpose or an intake opening can be separately provided for the transmission casing 36, for example.

In each of the above embodiments, descriptions are made for the cases that a sound absorption material is not disposed inside the transmission casing 36. However, it does not mean that the present invention excludes embodiments where a sound absorption material is disposed inside the transmission casing 36. Therefore, it is a matter of course that a sound absorption material can be disposed inside the transmission casing 36 in each of the above embodiments for a further reduction of noise, for example.

As described in the foregoing, the present invention is valuable for a motorcycle including a belt type continuously variable transmission having a resin block belt.

### DESCRIPTION OF REFERENCE NUMERALS AND SYMBOLS

1: motorcycle
2: vehicle body frame
3: seat
4: head pipe
5: down tube
6: main tube
6L and 6R: seat pillar (frame member)
9: rear arm
10: pivot shaft
12: front wheel
13: rear wheel
15: engine unit
16: engine
17: belt type continuously variable transmission (CVT)
21: cylinder
22: cylinder head
30: rear cushion unit
36: transmission casing
38: belt chamber
51: primary sheave
52: secondary sheave
55: V-belt (resin block belt)
60: impeller
71: intake duct (air passage, intake passage)
71a: curving part
80: foot rest
94: air chamber (air passage, intake passage)
94a: intake opening

## Claims

1. A motorcycle (1), comprising:
an engine unit (15) having a transmission casing (36) in which a belt chamber (38) is formed, and a belt type continuously variable transmission housed in the belt chamber and having a resin block belt (55);
a frame member disposed more rearward than or above the transmission casing, extending in a vertical direction or an obliquely upward and downward direction, and supporting at least a part of the engine unit;
an air passage (71) connected to the transmission casing, and used as an intake passage (71) for inducting air into the belt chamber or as an exhaust passage for discharging air from the belt chamber;
wherein the air passage extends rearward from the transmission casing passing over the frame member in a side view, and has a curving part (71a) curving at a part around the frame member.

2. The motorcycle according to claim 1, wherein the belt type continuously variable transmission includes a primary sheave (51) and a secondary sheave (52) positioned more rearward than the primary sheave, and the air passage is connected to a part of the transmission unit case more forward than a rear end of the primary sheave.

3. The motorcycle according to claim 1 or claim 2, further comprising a pair of the right and left frame members (6R and 6L), wherein the air passage passes through a space between both the frame members.

4. The motorcycle according to claim 3, further comprising a foot rest (80) positioned outside in the vehicle width direction of each of the frame members in a plan view.

5. The motorcycle according to any preceding claim, wherein the air passage is used as an intake passage for inducting air into the belt chamber.

6. The motorcycle according to claim 5, further comprising:
a vehicle body frame (2) having the frame member;
a rear wheel (13);
a rear arm (a) for supporting the rear wheel; and
a pivot shaft (10) for swingably supporting the rear arm on the vehicle body frame,
wherein the intake passage includes an intake opening positioned above the pivot shaft.

7. The motorcycle according to claim 6, further comprising a seat (3) for supporting a rider, wherein the intake opening is positioned below the seat.

8. The motorcycle according to claim 6 or claim 7, further comprising a rear cushion unit (30) provided at a center in the vehicle width direction in which an end is swingably connected to the vehicle body frame and the other end is swingably connected to the rear arm, wherein the air passage passes through a space between the rear cushion unit and the frame member in a plan view.

9. The motorcycle according to any preceding claim, wherein the engine includes a cylinder (21), and the air passage passes through a space between the cylinder and the frame member in a plan view.

10. The motorcycle according to any preceding claim, wherein at least a part of the air passage is positioned outside an inner end of the frame member in the vehicle width direction in a plan view, and the curving part is positioned inside the inner end of the frame member in the vehicle width direction in a plan view.

11. The motorcycle according to any preceding claim, wherein the transmission casing is disposed on either right or left side in the vehicle width direction, and a rear end of the air passage is disposed on the side opposite to the transmission casing in the vehicle width direction, in a plan view.

## Patentansprüche

1. Motorrad (1) mit
einer Maschineneinheit (15), die ein Getriebegehäuse (36), in dem eine Riemenkammer (38) ausgebildet ist und ein kontinuierlich variierbares Getriebe vom Riementyp, das in der Riemenkammer angeordnet ist und das einen Kunstharzblockriemen (55) aufweist, aufweist,
einem Rahmenelement, das weiter hinten angeordnet ist als oder über dem Getriebegehäuse, das sich in einer vertikalen Richtung oder einer schrägen Aufwärts- oder Abwärtsrichtung erstreckt und das mindestens einen Teil der Motoreinheit stützt, einem Luftdurchlass (61), der mit dem Getriebegehäuse verbunden ist und der als eine Einlassöffnung (71) verwendet wird zum Einleiten von Luft in die Riemenkammer oder als eine Auslassöffnung zum Auslassen von Luft aus der Riemenkammer, wobei der Luftdurchlass sich in eine Seitenansicht von dem Getriebegehäuse über das Rahmenelement nach hinten erstreckt und einen gekrümmten Abschnitt (71a) aufweist, der sich teilweise um das Rahmenelement krümmt.

2. Motorrad nach Anspruch 1, wobei das kontinuierlich veränderbare Getriebe vom Riementyp eine Primärscheibe (51) und eine Sekundärscheiben (52), die weiter hinten angeordnet ist als die Primärscheibe, aufweist und der Luftdurchlass weiter vorne als ein hinteres Ende der Primärscheibe mit einem Teil des Gehäuses der Getriebeeinheit verbunden ist.

3. Motorrad nach Anspruch 1 oder 2, darüber hinaus mit einem Paar von rechten und linken Rahmenelementen (6R und 6L), wobei der Luftdurchlass sich durch einen Raum zwischen beiden Rahmenelementen erstreckt.

4. Motorrad nach Anspruch 3, darüber hinaus mit einer Fußraste (80), die in einer ebenen Ansicht außerhalb in der Breitenrichtung des Fahrzeugs jedes der Rahmenelement angeordnet ist.

5. Motorrad nach einem der vorhergehenden Ansprüche, **dadurch gekennzeichnet, dass** der Luftdurchlass als ein Einlassdurchlass zum Einleiten von Luft in die Riemenkammer verwendet wird.

6. Motorrad nach Anspruch 5, darüber hinaus mit:
einem Fahrzeugaufbaurahmen (2) mit dem Rahmenelement,
einem Hinterrad (13),
einer hinteren Schwinge (a) zum Stützen des Hinterrads und
einer Drehachse (10) zum schwingenden Stützen der hinteren Schwinge an dem Fahrzeugaufbaurahmen,
wobei der Einlassdurchlass eine Einlassöffnung umfasst, die oberhalb der Drehachse angeordnet ist.

7. Motorrad nach Anspruch 6, darüber hinaus mit einem Sitz (3) zum Stützen eines Fahrers, wobei die Einlaßöffnung unterhalb des Sitzes angeordnet ist.

8. Motorrad nach Anspruch 6 oder 7, darüber hinaus mit einer hinteren Dämpfereinheit (30), die in einer Mitte in der Fahrzeugbreitenrichtung angeordnet ist, von der ein Ende schwingend mit dem Fahrzeugaufbaurahmen und das andere Ende schwingend mit der hinteren Schwinge verbunden ist, wobei der Luftdurchlass sich durch einen Raum zwischen der hinteren Dämpfereinheit und dem Rahmenelement in einer ebenen Ansicht erstreckt.

9. Motorrad nach einem der vorhergehenden Ansprüche, **dadurch gekennzeichnet, dass** der Motor einen Zylinder (21) aufweist und sich der Luftdurchlass in einer ebenen Ansicht, betrachtet durch einen Raum zwischen dem Zylinder und dem Rahmenelement erstreckt.

10. Motorrad nach einem der vorhergehenden Ansprüche, **dadurch gekennzeichnet, dass** mindestens ein Teil des Luftdurchlasses außerhalb eines inneren Endes des Rahmenelements in einer ebenen Ansicht in der Fahrzeugbreitenrichtung angeordnet ist und der gekrümmte Teil innerhalb des inneren Endes des Rahmenelements in der Fahrzeugbreitenrichtung in einer ebenen Ansicht angeordnet ist.

11. Motorrad nach einem der vorhergehenden Ansprüche, **dadurch gekennzeichnet, dass** das Getriebegehäuse entweder auf der rechten oder auf der linken Seite in der Fahrzeugbreitenrichtung angeordnet ist und ein hinteres Ende des Luftdurchlasses auf der Seite gegenüber dem Getriebegehäuse in der Fahrzeugbreitenrichtung in einer ebenen Ansicht angeordnet ist.

## Revendications

1. Motocyclette (1), comprenant :
une unité de moteur (15) ayant un carter de transmission (36) dans lequel une chambre de courroie (38) est formée, et une transmission à variation continue de type à courroie est logée dans la chambre de courroie et a une courroie réalisée avec un bloc de résine (55) ;
un élément de châssis disposé plus vers l'arrière que ou au-dessus du carter de transmission, s'étendant dans une direction verticale ou une direction obliquement ascendante et descendante, et supportant au moins une partie de l'unité de moteur ;
un passage d'air (71) raccordé au carter de transmission, et utilisé en tant que passage d'admission (71) pour introduire l'air dans la chambre de courroie ou en tant que passage d'échappement pour décharger l'air de la chambre de courroie ;
dans laquelle le passage d'air s'étend vers l'arrière à partir du carter de transmission en passant sur l'élément de châssis sur une vue latérale, et a une partie incurvée (71a) s'incurvant au niveau d'une partie située autour de l'élément de châssis.

2. Motocyclette selon la revendication 1, dans laquelle la transmission à variation continue de type à courroie comprend une poulie à gorge principale (51) et une poulie à gorge secondaire (52) positionnée plus vers l'arrière que la poulie à gorge principale, et le passage d'air est raccordé à une partie du boîtier d'unité de transmission plus vers l'avant qu'une extrémité arrière de la poulie à gorge principale.

3. Motocyclette selon la revendication 1 ou la revendication 2, comprenant en outre une paire d'éléments de châssis droit et gauche (6R et 6L), dans laquelle le passage d'air passe par un espace situé entre les deux éléments de châssis.

4. Motocyclette selon la revendication 3, comprenant en outre un repose-pied (80) positionné à l'extérieur dans le sens de la largeur du véhicule de chacun des éléments de châssis sur une vue en plan.

5. Motocyclette selon l'une quelconque des revendications précédentes, dans laquelle le passage d'air est utilisé en tant que passage d'admission pour introduire l'air dans la chambre de courroie.

6. Motocyclette selon la revendication 5, comprenant en outre :
un châssis de caisse de véhicule (2) ayant l'élément de châssis ;
une roue arrière (13) ;
un bras arrière (a) pour supporter la roue arrière ; et
un arbre de pivot (10) pour supporter de manière oscillante le bras arrière sur le châssis de caisse de véhicule,
dans laquelle le passage d'admission comprend une ouverture d'admission positionnée au-dessus de l'arbre de pivot.

7. Motocyclette selon la revendication 6, comprenant en outre un siège (3) pour supporter un motocycliste, dans laquelle l'ouverture d'admission est positionnée au-dessous du siège.

8. Motocyclette selon la revendication 6 ou la revendication 7, comprenant en outre une unité d'amortisseur arrière (30) prévue au centre dans le sens de la largeur du véhicule dans laquelle une extrémité est raccordée de manière oscillante au châssis de caisse de véhicule et l'autre extrémité est raccordée de manière oscillante au bras arrière, dans laquelle le passage d'air passe par un espace situé entre l'unité d'amortisseur arrière et l'élément de châssis sur une vue en plan.

9. Motocyclette selon l'une quelconque des revendications précédentes, dans laquelle le moteur comprend un cylindre (21) et le passage d'air passe par un espace situé entre le cylindre et l'élément de châssis sur une vue en plan.

10. Motocyclette selon l'une quelconque des revendications précédentes, dans laquelle au moins une partie du passage d'air est positionnée à l'extérieur d'une extrémité interne de l'élément de châssis dans le sens de la largeur du véhicule sur une vue en plan, et la partie incurvée est positionnée à l'intérieur de l'extrémité interne de l'élément de châssis dans le sens de la largeur du véhicule sur une vue en plan.

11. Motocyclette selon l'une quelconque des revendications précédentes, dans laquelle le carter de transmission est disposé du côté droit ou gauche dans le sens de la largeur du véhicule et une extrémité arrière du passage d'air est disposée du côté opposé au carter de transmission dans le sens de la largeur du véhicule, sur une vue en plan.
